Europäisches Patentamt

European Patent Office

Office européen des brevets

(19)

(11) Veröffentlichungsnummer: **0 348 642**

**A1**

(12) # EUROPÄISCHE PATENTANMELDUNG

(21) Anmeldenummer: **89108454.3**

(51) Int. Cl.⁴: **F16C 11/06**

(22) Anmeldetag: **11.05.89**

Geänderte Patentansprüche gemäss Regel 86 (2) EPÜ.

(30) Priorität: **01.07.88 DE 8808443 U**

(43) Veröffentlichungstag der Anmeldung: **03.01.90 Patentblatt 90/01**

(84) Benannte Vertragsstaaten: **DE FR GB IT**

(71) Anmelder: **TRW Ehrenreich GmbH & Co. KG**
**Hansa-Allee 190**
**D-4000 Düsseldorf 11(DE)**

(72) Erfinder: **Schnitzler, Dieter**
**Mettmannerstrasse 117**
**D-4010 Hilden(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

(54) **Kugelgelenk.**

(57) Die Erfindung betrifft ein Kugelgelenk insbesondere für Lenk-und Übertragungsgestänge von Kraftfahrzeugen, mit einer Lagerschale (3) aus Kunststoff, die eine Unterschale (5) und eine Oberschale (6) zum Abstützen eines Kugelkopfes (2) in einem Gelenkgehäuse (4) aufweist, wobei die Unterschale (5) einer Gehäuseöffnung (8) für einen Kugelzapfen (1) zugewandt ist und die Oberschale (6) über ein Federelement (11) an einem Gehäusedeckel (9) abgestützt ist und wobei die Unterschale (5) elastisch mit dem Außenrand der Oberschale (6) verbunden ist. Um ein technisch verbessertes Kugelgelenk zu schaffen, dessen Montage erleichtert ist, dessen Unterschale (5) und Oberschale (6) vor einem gegenseitigen Verdrehen gesichert sind und das bessere Betriebseigenschaften aufweist, wird vorgeschlagen, daß die Unterschale (5) und die Oberschale (6) einteilig über mindestens einen elastischen Verbindungssteg (12) verbunden sind.

F i g.1

EP 0 348 642 A1

## Kugelgelenk

Die Erfindung betrifft ein Kugelgelenk insbesondere für Lenk und Übertragungsgestänge von Kraftfahrzeugen, mit einer Lagerschale aus Kunststoff, die eine Unterschale und eine Oberschale zum Abstützen eines Kugelkopfes in einem Gelenkgehäuse aufweist, wobei die Unterschale einer Gehäuseöffnung für einen Kugelzapfen zugewandt ist und die Oberschale über ein Federelement an einem Gehäusedeckel abgestützt ist und wobei die Unterschale elastisch mit dem Außenrand der Oberschale verbunden ist.

Aus der DE-OS 24 05 160 ist bereits ein gattungsgemäßes Kugelgelenk mit einer Unterschale und einer Oberschale bekannt, die über eine umlaufende elastische Verbindung abdichtend miteinander verbunden sind. Die elastische Verbindung wird von einer Dichtlippe der Oberschale aus einem elastischen Werkstoff gebildet, die in eine Ringnut am oberen Rand der Unterschale dichtend eingreift. Hierzu wird die Dichtlippe unter dem Druck eines Verschlußdeckels in die Ringnut eingefügt.

Die Montage des vorbekannten Kugelgelenkes ist aufwendig, weil Oberschale und Unterschale zusammengesetzt werden müssen und erst nach Einwalzen des Verschlußdeckels gesichert sind. Außerdem weist die Oberschale aus einem elastomeren Werkstoff ungünstige Gleit-, Abnutzungs- und Ermüdungseigenschaften auf, die zu einer Veränderung ihrer Vorspannung und der Betriebskennwerte des Kugelgelenkes führen können.

In der DE-OS 29 13 700 ist ein Kugelgelenk mit einer Unterschale und einer Oberschale offenbart, wobei die Oberschale sich über eine Feder an einem Gehäusedeckel abstützt. An die Oberschale sind axial gerichtete Lappen angeformt, welche formschlüssig in entsprechende Ausnehmungen der Unterschale eingreifen. Die formschlüssige Verbindung zwischen Unterschale und Oberschale besteht jedoch nur bei zusammengebautem Kugelgelenk und muß bei der Montage hergestellt werden.

Davon ausgehend liegt der Erfindung die **Aufgabe** zugrunde, ein technisch verbessertes Kugelgelenk zu schaffen, dessen Montage erleichtert ist, dessen Unterschale und Oberschale vor einem gegenseitigen Verdrehen gesichert sind und das bessere Betriebseigenschaften aufweist.

Zur technischen **Lösung** dieser Aufgabe sind die Unterschale und die Oberschale einteilig über mindestens einen elastischen Verbindungssteg verbunden.

Die einteilige Verbindung der Unterschale und der Oberschale hat den **Vorteil,** daß diese bei der Montage des Kugelgelenkes nicht erst zusammengesetzt und in der Einbaulage fixiert werden müssen. Zugleich ermöglichen die material- oder formelastischen Stege eine Relativbewegung zwischen Unterschale und Oberschale, die ein Vorspannen der Oberschale und des Kugelkopfes über das am Gehäusedeckel abgestützte Federelement ermöglicht. Dabei kann ein Lagerschalenmaterial mit hervorragenden Gleit-, Abnutzungs- und Ermüdungseigenschaften gewählt werden, weil die Vorspannung des Kugelkopfes hauptsächlich durch das Federelement eingestellt wird. Bei einer formelastischen, insbesondere dünnwandigen Ausbildung der Verbindungsstege können auch relativ unelastische Lagerschalenwerkstoffe verwendet werden.

Bei einer Ausgestaltung der Erfindung sind um die Zapfenachse versetzte und von Durchbrüchen getrennte Verbindungsstege vorgesehen, wodurch die Formelastizität der Verbindung von Unterschale und Oberschale gesteigert wird. Bei einer vorteilhaften Ausgestaltung sind drei um 120° um die Zapfenachse versetzte Verbindungsstege vorgesehen, welche die Oberschale auch nach einem Kippen relativ zur Unterschale zurückstellen.

Bei einer weiteren Ausgestaltung bildet jeder Verbindungssteg zwischen Unterschale bzw. Oberschale mindestens eine in Zapfenachsrichtung sich erstreckende Nut. Hierbei ist jeder Verbindungssteg in mindestens einem Mittelabschnitt in Zapfenachsrichtung geführt, so daß er senkrecht zur Zapfenachse ausgebogen werden kann. Außerdem ist jeder Verbindungssteg in Seitenabschnitten senkrecht zur Zapfenachsrichtung geführt, wo er in Zapfenachsrichtung ausgebogen werden kann. Hierdurch wird die relative Beweglichkeit der Oberschale zur Unterschale in Zapfenachsrichtung gesteigert. Jede Nut kann von einem Mittel- und einem Seitenabschnitt des Verbindungssteges und der Unterschale bzw. der Oberschale begrenzt werden.

Die axiale Ausrichtung der Nuten ermöglicht außerdem die Herstellung der Lagerschale mit einem relativ einfachen Spritzwerkzeug und eine bessere Entformbarkeit der Lagerschale nach dem Spritzen. Die Entformbarkeit der Lagerschale wird noch weiter verbessert, wenn jede Nut eine sich zur Nutöffnung hin vergrößernde Nutbreite hat.

Bei einer weiteren Ausgestaltung hat jeder Verbindungssteg mindestens eine Falte, so daß die Verbindung zwischen Unterschale und Oberschale in der Art eines Faltenbalges ausgebildet ist. Hierdurch wir die Formelastizität des Verbindungssteges noch weiter erhöht. Vorzugsweise bildet der gefaltete Verbindungssteg mindestens eine in Zapfenachs richtung sich erstreckende Nut zwischen Mittelabschnitten und einem diese verbindenden Seitenabschnitt.

Schließlich ist bei einer Ausgestaltung der Erfindung vorgesehen, daß die Lagerschale aus einem duromeren Werkstoff, insbesondere aus Polyamid (PA) besteht, wobei hervorragende Gleiteigenschaften bei ausreichender Formelastizität erreicht werden.

Weitere Einzelheiten und Vorteile des Gegenstandes der Erfindung ergeben sich aus der folgenden Beschreibung der zugehörigen Zeichnungen, in denen eine bevorzugte Ausführungsform eines erfindungsgemäßen Kugelgelenkes dargestellt worden ist. In den Zeichnungen zeigen:

Fig. 1 ein zusammengesetztes Kugelgelenk mit drei Verbindungsstegen im Längsschnitt;

Fig. 2 dasselbe Kugelgelenk längsgeschnitten im Sprengbild;

Fig. 3 eine Lagerschale desselben Kugelgelenkes in der Draufsicht;

Fig. 4 dieselbe Lagerschale entlang der Linie IV-IV der Fig. 3 geschnitten;

Fig. 5 dieselbe Lagerschale entlang der Linie V-V der Fig. 3 geschnitten.

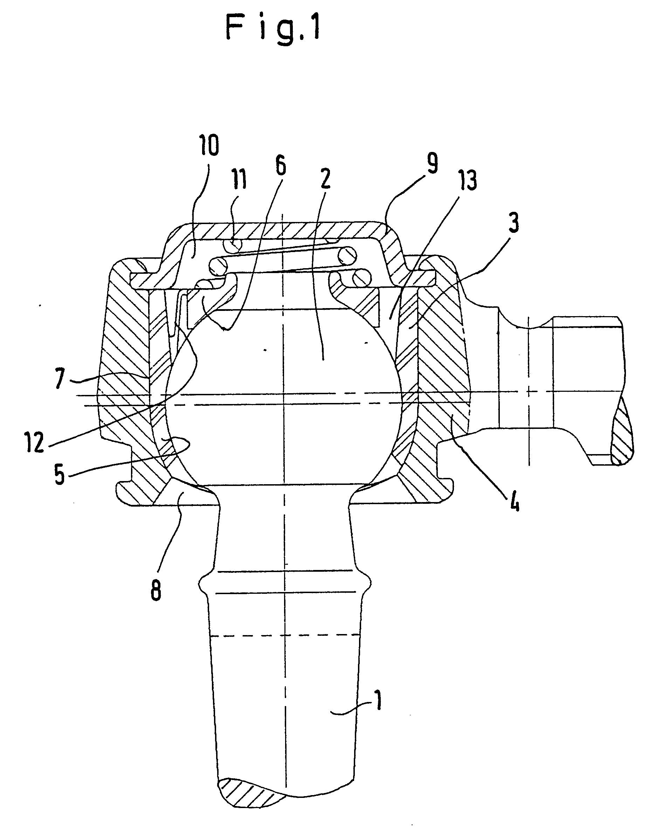

Wie aus der Fig. 1 ersichtlich ist, hat das Kugelgelenk einen Kugelzapfen 1, dessen Kugelkopf 2 von einer Lagerschale 3 dreh- und schwenkbeweglich in einem Gelenkgehäuse 4 gehalten wird. Die Lagerschale 3 hat eine Unterschale 5 und eine Oberschale 6, welche gemeinsam eine den Kugelkopf 2 beidseitig des Äquators abstützende Teil-Kugelfläche bilden.

Die Unterschale 5 ist in eine im wesentlichen zylindrische Gehäusebohrung 7 eingesetzt und nahe einer Gehäuseöffnung 8 für den Kugelzapfen 1 an einem sich geringfügig verjüngenden Abschnitt der Gehäusebohrung 7 axial abgestützt. Anderenends wird die Unterschale 5 von einem in das Gelenkgehäuse 4 eingewalzten Gehäusedeckel 9 axial abgestützt. Der Gehäusedeckel 9 verschließt zugleich eine Montageöffnung des Gelenkgehäuses.

Die Oberschale 6 ist über eine konische Spiralfeder 11 am Gehäusedeckel 9 abgestützt. Die Vorspannung der Spiralfeder 11 bestimmt den Anpreßdruck der Oberschale auf den Kugelkopf 2 und legt die Betriebskennwerte des Kugelgelenkes fest. Die hierfür erforderliche Relativbeweglichkeit der Oberschale 6 zur Unterschale 5 wird durch drei um 120° um die Zapfenachse versetzt angeordnete Verbindungsstege 12 zwischen Unterschale 5 und Oberschale 6 gewährleistet. Die Verbindungsstege 12 sind vollständig in einer Einsetzöffnung 13 der Unterschale 5 für die Oberschale 6 untergebracht.

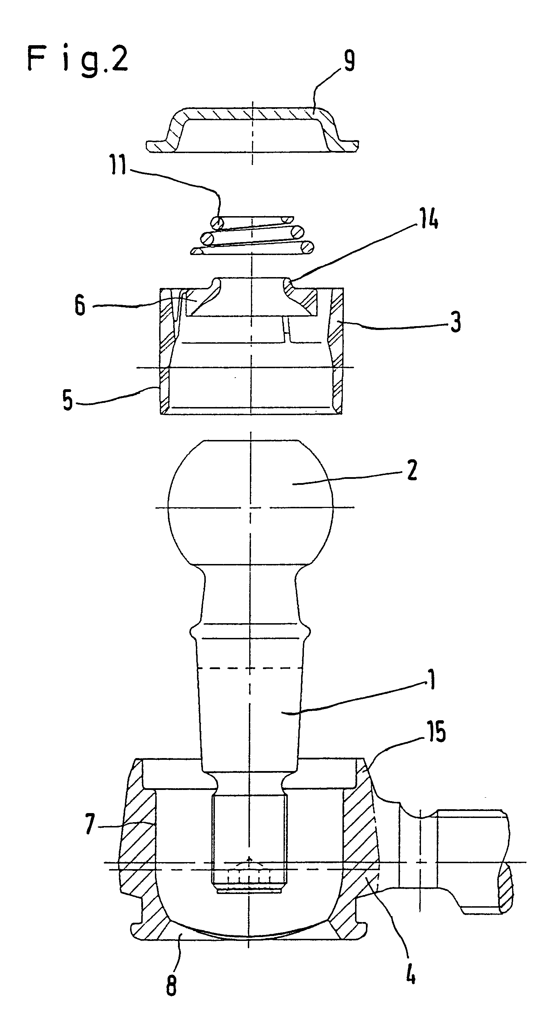

Wie besser aus der Fig. 2 ersichtlich ist, wird beim Zusammenbau des Kugelgelenkes zunächst der Kugelzapfen 1 mit seinem Kugelkopf 2 in die Lagerschale 3 eingesetzt. Dabei übt das Gelenkgehäuse 4 mit der sich verjüngenden Gehäusebohrung 7 eine radiale Kraft auf die Unterschale 5 aus, so daß sich diese nahe der Gehäuseöffnung 8 an den Kugelkopf 2 anschmiegt. Dann wird die konische Spiralfeder 11 auf die Oberschale 6 aufgesetzt, auf der sie von einem Zentrierrand 14 zentriert wird. Schließlich wird der Gehäusedeckel 9 aufgesetzt und durch Einwalzen eines Walzrandes 15 im Gelenkgehäuse 4 festgelegt.

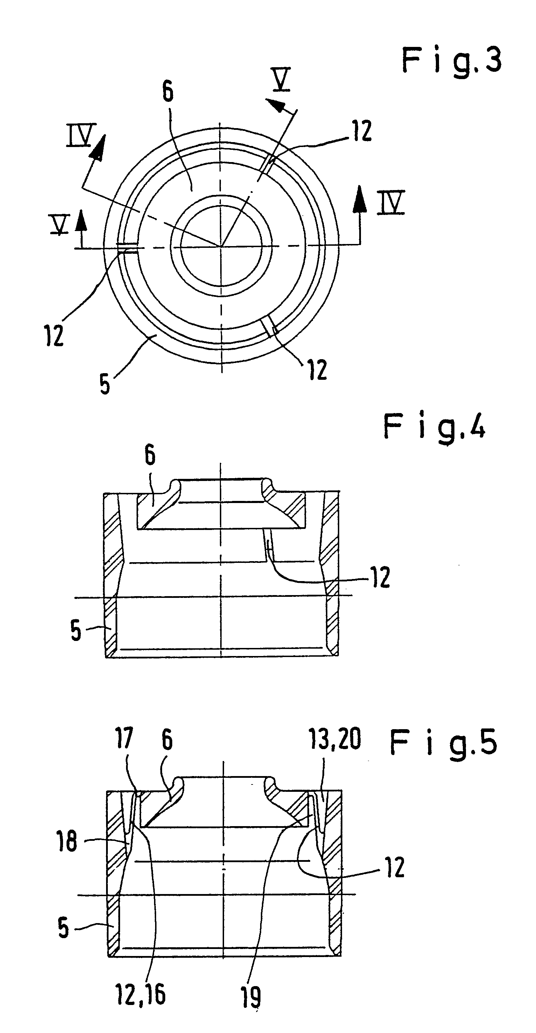

Die Anordnung und Ausbildung der Verbindungsstege 12 kann besser anhand der Fig. 3 bis 5 erklärt werden. Die Verbindungsstege 12 sind an drei um 120° versetzten Stellen um die Zapfenachse angeordnet. Da sie dünnwandig und schmal sind, ist ihre Formelastizität groß. Die Verbindungsstege 12 erstrecken sich ausschließlich in der Einsetzöffnung 13. Sie haben dort einen vornehmlich in Zapfenachsrichtung verlaufenden Mittelabschnitt 16, der besonders eine Zentrierung der Oberschale 6 in der Unterschale 5 ermöglicht. Sie haben außerdem vornehmlich senkrecht zur Zapfenachsrichtung verlaufende Seitenabschnitte 17,18, die eine Relativbewegung der Oberschale 6 zur Unterschale 5 in Zapfenachsrichtung begünstigen. Wenn sich zumindest an einen der Seitenabschnitte 17,18 ein weiterer Mittelabschnitt anschließt, haben die Verbindungsstege eine Falte und weisen wie ein Faltenbalg eine besonders hohe Formelastizität auf.

Jeder Verbindungssteg 12 definiert zwei in Zapfenachsrichtung sich erstreckende Nuten 19,20, welche von dem Mittelabschnitt 16, dem Seitenabschnitt 17 oder 18 und der Oberschale 6 oder der Unterschale 5 begrenzt werden. Die Nuten 19,20 erweitern sich zu ihren Nutöffnungen hin und begünstigen die Herstellung der Lagerschale 3 in einem Spritzgießverfahren.

### Bezugszeichenliste

1 Kugelzapfen
2 Kugelkopf
3 Lagerschale
4 Gelenkgehäuse
5 Unterschale
6 Oberschale
7 Gehäusebohrung
8 Gehäuseöffnung
9 Gehäusedeckel
10 Montageöffnung
11 Spiralfeder
12 Verbindungssteg
13 Einsetzöffnung
14 Zentrierrand
15 Walzrand
16 Mittelabschnitt
17 Seitenabschnitt
18 Seitenabschnitt

19 Nut
20 Nut

## Ansprüche

1. Kugelgelenk, insbesondere für Lenk- und Übertragungsgestänge von Kraftfahrzeugen, mit einer Lagerschale (3) aus Kunststoff, die eine Unterschale (5) und eine Oberschale (6) zum Abstützen eines Kugelkopfes (2) in einem Gelenkgehäuse (4) aufweist, wobei die Unterschale (5) einer Gehäuseöffnung (8) für einen Kugelzapfen (1) zugewandt ist und die Oberschale (6) über ein Federelement (11) an einem Gehäusedeckel (9) abgestützt ist und wobei die Unterschale (5) elastisch mit dem Außenrand der Oberschale (6) verbunden ist, **dadurch gekennzeichnet**, daß die Unterschale (5) und die Oberschale (6) einteilig über mindestens einen elastischen Verbindungssteg (12) verbunden sind.

2. Kugelgelenk nach Anspruch 1, dadurch gekennzeichnet, daß um die Zapfenachse versetzte und von Durchbrüchen getrennte Verbindungsstege (12) vorgesehen sind.

3. Kugelgelenk nach Anspruch 2, dadurch gekennzeichnet, daß drei um 120° um die Zapfenachse versetzte Verbindungsstege (12) vorgesehen sind.

4. Kugelgelenk nach einem der Ansprüche 1 bis 3, dadurch gekennzeichnet, daß jeder Verbindungssteg (12) zwischen Unterschale (5) bzw. Oberschale (6) mindestens eine in Zapfenachsrichtung sich erstreckende Nut (19,20) bildet.

5. Kugelgelenk nach Anspruch 5, dadurch gekennzeichnet, daß jede Nut (19,20) eine sich zur Nutöffnung hin vergrößernde Nutbreite hat.

6. Kugelgelenk nach einem der Ansprüche 1 bis 5, dadurch gekennzeichnet, daß jeder Verbindungssteg (12) mindestens eine Falte hat.

7. Kugelgelenk nach einem der Ansprüche 1 bis 6, dadurch gekennzeichnet, daß die Lagerschale (3) aus einem duromeren Werkstoff, insbesondere aus Polyamid (PA) besteht.
Geänderte Patentansprüche gemäss Regel 86(2) EPÜ.

1. Kugelgelenk, insbesondere für Lenk- und Übertragungsgestänge von Kraftfahrzeugen, mit einer Lagerschale (3) aus Kunststoff, die eine Unterschale (5) und eine Oberschale (6) zum Abstützen eines Kugelkopfes (2) in einem Gelenkgehäuse (4) aufweist, wobei die Unterschale (5) einer Gehäuseöffnung (8) für einen Kugelzapfen (1) zugewandt ist und die Oberschale (6) über ein Federelement (11) an einem Gehäusedeckel (9) abgestützt ist und wobei die Unterschale (5) elastisch mit dem Außenrand der Oberschale (6) verbunden ist, **dadurch gekennzeichnet**, daß die Unterschale (5) und die Oberschale (6) durch drei um 120° um die Zapfenachse versetzte Verbindungsstege (12) einteilig verbunden sind.

2. Kugelgelenk nach Anspruch 1, dadurch gekennzeichnet, daß jeder Verbindungssteg (12) zwischen Unterschale (5) bzw. Oberschale (6) mindestens eine in Zapfenachsrichtung sich erstreckende Nut (19, 20) bildet.

3. Kugelgelenk nach Anspruch 2, dadurch gekennzeichnet, daß jede Nut (19,20) eine sich zur Nutöffnung hin vergrößernde Nutbreite hat.

4. Kugelgelenk nach einem der Ansprüche 1 bis 3, dadurch gekennzeichnet, daß jeder Verbindungssteg (12) mindestens eine Falte hat.

5. Kugelgelenk nach einem der Ansprüche 1 bis 4, dadurch gekennzeichnet, daß die Lagerschale (3) aus einem duromeren Werkstoff, insbesondere aus Polyamid (PA) besteht.

# Fig.1

# Fig.2

Fig.3

Fig.4

Fig.5